# EUROPÄISCHE PATENTSCHRIFT

(11) **EP 3 279 403 B1**
(45) Veröffentlichungstag und Bekanntmachung des Hinweises auf die Patenterteilung: **21.09.2022**
(21) Anmeldenummer: 17184978.9
(22) Anmeldetag: 04.08.2017
(51) Int. Cl.: E04B 5/36, E04B 1/80

(54) **VERFAHREN ZUR HERSTELLUNG EINER GEBÄUDEDECKENVORRICHTUNG UND GEBÄUDEDECKENVORRICHTUNG**
METHOD OF MANUFACTURING A FLOOR SLAB AND FLOOR SLAB
PROCÉDÉ DE FABRICATION D'UN DALLE DE CONSTRUCTION ET DALLE DE CONSTRUCTION

(30) Priorität: 05.08.2016 DE 102016114572
(43) Veröffentlichungstag der Anmeldung: 07.02.2018
(73) Patentinhaber: puren GmbH, 88662 Überlingen (DE)
(72) Erfinder: Ernst, Maximilian, 88634 Herdwangen (DE)
(74) Vertreter: Daub, Thomas

(56) Entgegenhaltungen:
- EP-A1- 0 288 385
- FR-A1- 2 494 624
- US-A1- 2011 036 046
- US-A1- 2014 260 034

## Beschreibung

### Stand der Technik

Die Erfindung betrifft ein Verfahren zur Herstellung einer Gebäudedeckenvorrichtung und eine Gebäudedeckenvorrichtung.

Aus dem Stand der Technik sind bereits Verfahren zur Herstellung einer Gebäudedeckenvorrichtung bekannt, bei welchen ein Trägerelement mit einem thermoplastischen Dämmstoffelement formschlüssig verbunden wird.

Dokument US 2014/260034 A1 offenbart ein Verfahren nach der Präambel von Anspruch 1.

Die Aufgabe der Erfindung besteht insbesondere darin, ein gattungsgemäßes Verfahren und eine Gebäudedeckenvorrichtung mit verbesserten Eigenschaften hinsichtlich einer Effizienz, insbesondere einer Kosteneffizienz, und einer besonders hohen Dämmwirkung bereitzustellen. Die Aufgabe wird erfindungsgemäß durch die Merkmale der Patentansprüche 1 und 8 gelöst, während vorteilhafte Ausgestaltungen und Weiterbildungen der Erfindung den Unteransprüchen entnommen werden können.

### Vorteile der Erfindung

Es wird ein Verfahren zur Herstellung einer Gebäudedeckenvorrichtung gemäß Anspruch 1.

Hierdurch kann vorteilhaft eine Effizienz, insbesondere eine Kosteneffizienz, verbessert werden. Insbesondere kann in einem Schritt das Trägerelement ausgebildet und mit dem Dämmstoffelement verbunden werden. Besonders vorteilhaft kann eine nachträgliche, insbesondere Über-Kopf-Montage des Dämmstoffelements vermieden werden. Insbesondere können Deformationen und/oder Beschädigungen des Dämmstoffelements vermieden werden. Insbesondere schützt das Dämmstoffelement im montierten Zustand das Trägerelement vor extremen Anforderungen wie Temperaturwechseln, Feuchtigkeit, insbesondere Kondensatbildung, und/oder Schimmelbefall sowie insbesondere Pilzbefall.

Unter einer "Gebäudevorrichtung" soll in diesem Zusammenhang insbesondere zumindest ein, insbesondere tragendes, Teil, insbesondere zumindest eine Unterbaugruppe, eines Gebäudes, vorzugsweise einer Tiefgarage, verstanden werden. Die Gebäudevorrichtung bildet eine Decke des Gebäudes, vorzugsweise der Tiefgarage, aus. Unter einer "Gebäudedeckenvorrichtung" soll insbesondere ein Gebäudevorrichtung verstanden werden, die zumindest teilweise, vorzugsweise zumindest zu einem Großteil und besonders bevorzugt vollständig, eine Decke, vorzugsweise eine Geschossdecke zwischen einzelnen Geschossen, des Gebäudes, vorzugsweise einer Tiefgarage, ausbildet. Unter dem Ausdruck "zumindest zu einem Großteil" soll in diesem Zusammenhang insbesondere zu zumindest mehr als 50 %, vorteilhaft zu zumindest mehr als 65 %, vorzugsweise zu zumindest mehr als 75 % und besonders vorteilhaft zu zumindest mehr als 95 % verstanden werden.

Unter einem "Dämmstoffelement" soll insbesondere ein Hochleistungsdämmstoffelement verstanden werden, welches, insbesondere bei einer Dicke von weniger als 120 mm, zumindest im Wesentlichen senkrecht zu einer Haupterstreckungsebene, eine Wärmeleitfähigkeit von weniger als 0,030 W/mK und vorzugsweise von weniger als 0,028 W/mK aufweist. Das Dämmstoffelement ist schwerentflammbar, gemäß Klasse B und/oder Klasse C der Norm EN 13501-1. Ferner ist das Dämmstoffelement insbesondere zumindest im Wesentlichen druckfest. Unter "zumindest im Wesentlichen druckfest" soll insbesondere nach Norm EN 826 und vorteilhaft einem Druck von mehr als 120 kPa widerstehend verstanden werden. Das Dämmstoffelement ist aus zumindest zwei Schichten, vorzugsweise zumindest zwei Schichten verschiedener Materialien, ausgebildet.

Unter einem "duroplastischen Material" soll insbesondere ein Kunststoff verstanden werden, welcher ein Objekt ausbildet, welches nach einem Aushärten zumindest, insbesondere plastisch, unverformbar ist, insbesondere ohne dass dieses zerstört wird. Vorzugsweise ist das duroplastische Material Polyurethan und/oder Polyisocyanurat, insbesondere trimerisierter Polyurethan. Das Dämmstoffelement ist frei von einem thermoplastischen Material, wie beispielsweise Polystyrol. Unter einem "thermoplastischen Material" soll in diesem Zusammenhang insbesondere ein Kunststoff verstanden werden, welcher insbesondere nach einem Aushärten in einem insbesondere dazu vorgesehenen Temperaturbereich verformbar ist, insbesondere plastisch verformbar ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Trägerelement" soll insbesondere ein Element verstanden werden, welches dazu vorgesehen ist, mehrere Dämmstoffelemente, die mit dem Trägerelement verbunden sind, zu tragen und zumindest teilweise eine Gewichtskraft, mehrerer Dämmstoffelemente, zumindest zu einem Großteil und besonders bevorzugt vollständig aufzunehmen. Vorzugsweise weist das Trägerelement zumindest eine Bewehrung auf. Unter einem "frei formbaren und aushärtbaren Baustoff" soll insbesondere ein Baustoff verstanden werden, welcher in zumindest einem Herstellzustand dazu vorgesehen ist, in eine gewünschte Form gebracht zu werden und in dieser auszuhärten, indem dieser vorzugsweise feucht abgebunden wird. Besonders bevorzugt ist der frei formbare und aushärtbare Baustoff ein Zement und/oder ein Beton. Unter "stoffschlüssig verbunden" soll insbesondere verstanden werden, dass Masseteile durch atomare oder molekulare Kräfte zusammengehalten werden, wie beispielsweise durch Kleben, Löten, Schweißen und/oder Vulkanisieren. Unter "kraft- und/oder formschlüssig verbunden" soll dabei insbesondere verbunden durch eine vorzugsweise lösbare Verbindung verstanden werden, wobei eine Haltekraft zwischen zwei Bauteilen vorzugsweise durch einen geometrischen Eingriff der Bauteile ineinander und/oder durch eine Reibkraft zwischen den Bauteilen übertragen wird.

Es wird ferner vorgeschlagen, dass das Dämmstoffelement eine offenporige Oberfläche aufweist, welche in dem Verbundschritt zumindest stoffschlüssig und insbesondere kraft- und/oder formschlüssig mit dem Baustoff verbunden wird. Die offenporige Oberfläche wird insbesondere durch Zerteilen eines Rohlings des Dämmstoffelements gebildet, wodurch in dem Rohling eingeschlossene Poren und/oder Kapillaren zumindest teilweise geöffnet werden und die offenporige Oberfläche ausbilden. Vorzugsweise ist der Rohling zumindest teilweise, vorzugsweise zumindest zu einem Großteil und besonders bevorzugt vollständig aus dem duroplastischen Material gebildet. Der Baustoff füllt insbesondere zumindest teilweise die geöffneten Poren und/oder Kapillaren aus. Hierdurch kann vorteilhaft eine Oberfläche zur stoffschlüssigen Verbindung vergrößert werden, wodurch insbesondere eine stoffschlüssige Verbindung verbessert werden kann.

Des Weiteren wird vorgeschlagen, dass das Dämmstoffelement zumindest eine Deckschicht aufweist, welche in dem Verbundschritt zumindest stoffschlüssig mit dem Baustoff verbunden wird. Die Deckschicht bildet zumindest teilweise eine Seite des Dämmstoffelements, welche dem Trägerelement zugewandt ist und vorzugsweise in einem montierten Zustand unmittelbar an dem Trägerelement anliegt. Vorzugsweise wird bei dem Verbundschritt die Deckschicht durch den Baustoff zumindest teilweise durchdrungen und härtet anschließend, insbesondere gemeinsam mit dem Baustoff, aus, wodurch das Dämmstoffelement mit dem Baustoff verbunden wird. Darunter, dass "die Deckschicht zumindest teilweise durchdrungen wird", soll insbesondere verstanden werden, dass die Deckschicht eine Flüssigkeit, insbesondere Wasser, aus dem Baustoff aufnimmt. Insbesondere weist das Dämmstoffschichtelement zumindest eine weitere Deckschicht auf, welche vorzugsweise zumindest teilweise verschieden von der Deckschicht ausgebildet ist. Die weitere Deckschicht bildet insbesondere zumindest teilweise eine Seite des Dämmstoffelements aus, welche vorzugsweise dem Trägerelement abgewandt ist und welche vorzugsweise der dem Trägerelement zugewandten Seite des Dämmstoffelements gegenüber liegt. Die Deckschicht und/oder die weitere Deckschicht kann insbesondere eine antimikrobielle Beschichtung aufweisen, wie beispielsweise eine Metalldeckschicht, welche zumindest Aluminium umfasst. Hierdurch kann vorteilhaft die stoffschlüssige Verbindung weiter verbessert werden. Weiter vorteilhaft kann ein Schimmelbefall des Trägers und/oder des Dämmstoffelements vermieden werden.

Es wird weiterhin vorgeschlagen, dass in zumindest einem Herstellungsschritt das Dämmstoffelement durch Laminieren eines Kunststoffhartschaums mit zumindest einer Deckschicht, insbesondere der bereits erwähnten Deckschicht und/oder der weiteren Deckschicht, hergestellt wird. Der Kunststoffhartschaum ist teilweise aus dem duroplastischen Material gebildet. Vorzugsweise kann der Kunststoffhartschaum von zumindest einem Teil eines insbesondere vor dem Laminieren hergestellten Rohlings gebildet sein und/oder direkt beim Laminieren auf die Deckschicht, und insbesondere auf die weitere Deckschicht und/oder zwischen die Deckschicht und die weitere Deckschicht, aufgeschäumt werden. Hierdurch kann vorteilhaft eine hohe Dämmstoffwirkung erreicht werden. Insbesondere kann eine Stabilität des Dämmstoffelements verbessert werden.

Erfindungsgemäß wird vorgeschlagen, dass das Dämmstoffelement in dem Verbundschritt zumindest teilweise eine verlorene Schalung ausbildet. Die Gebäudedeckenvorrichtung umfasst zumindest ein weiteres und/oder mehrere weitere, zumindest im Wesentlichen äquivalent ausgebildete Dämmstoffelemente, welche vorzugsweise gemeinsam zumindest teilweise, insbesondere zumindest zu einem Großteil und besonders bevorzugt vollständig die verlorene Schalung ausbilden. Unter "zumindest im Wesentliche äquivalent" ausgebildet soll in diesem Zusammenhang insbesondere abgesehen von Herstellungs- und Montagetoleranzen identisch verstanden werden. Unter einer "verlorenen Schalung" soll insbesondere eine Schalung verstanden werden, welche in einem Vormontageschritt eine Form, insbesondere eine Gussform, für den Baustoff ausbildet und nach einem Verbundschritt mit dem Baustoff verbunden ist. Hierdurch kann vorteilhaft eine Dämmung der Gebäudevorrichtung verbessert werden. Insbesondere kann darauf verzichtet werden, in einem weiteren Schritt eine Dämmung zu verlegen. Besonders vorteilhaft kann auf eine Verwendung von Schalöl und insbesondere eine Säuberung von Schalungselementen verzichtet werden.

Ferner wird vorgeschlagen, dass die Gebäudedeckenvorrichtung zumindest ein weiteres Dämmstoffelement, insbesondere das bereits erwähnte weitere Dämmstoffelement, aufweist, welches in zumindest einem Vormontageschritt entlang einer Linie mit dem Dämmstoffelement zusammengefügt wird, sodass das Dämmstoffelement und das weitere Dämmstoffelement entlang der Linie zumindest teilweise zueinander versetzt angeordnet sind. Die Linie ist insbesondere eine Gerade und verläuft vorzugsweise zumindest im Wesentlichen parallel zu einer Haupterstreckungsebene zumindest des Dämmstoffelements und/oder des weiteren Dämmstoffelements. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsebene" eines Objekts soll insbesondere eine Ebene verstanden werden, welche sich parallel zu einer größten Seitenfläche eines kleinsten gedachten Quaders erstreckt, welcher das Objekt gerade noch vollständig umschließt, und insbesondere durch den Mittelpunkt des Quaders verläuft. Insbesondere weist das erste Dämmstoffelement ein Fügeelement und das weitere Dämmstoffelement ein zu dem Fügeelement korrespondierend ausgebildetes weiteres Fügeelement auf. Insbesondere bei dem Vormontageschritt verbinden das Fügeelement und das weitere Fügeelement das Dämmstoffelement und das weitere Dämmstoffelement miteinander. Vorzugsweise ist das Fügeelement als ein Stufenfalz ausgebildet, welcher vorzugsweise das Dämmstoffelement in Umfangrichtung zumindest teilweise umläuft. Die Fügeelemente sind insbesondere zu einer kraft- und/oder formschlüssigen Verbindung vorgesehen. Vorzugsweise bilden die Fügeelemente eine Nut-Feder-Verbindung aus. Alternativ oder zusätzlich ist es denkbar, das Dämmstoffelement und das weitere Dämmstoffelement stoffschlüssig miteinander zu verbinden. Vorzugsweise können die Fügeelemente zusätzlich miteinander verklebt sein. Hierdurch kann vorteilhaft eine Stabilität der Anordnung der Dämmstoffelemente verbessert werden. Insbesondere kann ein Durchtritt des aushärtbaren Baustoffs durch Fugen zwischen den Dämmstoffelementen vermieden werden. Besonders vorteilhaft kann insbesondere eine Verschmutzung einer Unterseite der Dämmstoffelemente vermieden werden.

In einer besonders bevorzugten Ausgestaltung wird vorgeschlagen, dass die Gebäudedeckenvorrichtung zumindest ein Verbindungselement aufweist, wobei das Dämmstoffelement und das Trägerelement in dem Verbundschritt mittels des Verbindungselements zusätzlich zumindest teilweise form- und/oder kraftschlüssig miteinander verbunden werden. Das Verbindungselement kann insbesondere als eine Schraube und/oder als ein Nagel ausgebildet sein. Vorzugsweise ist das Verbindungselement als ein Dübel ausgebildet. Das Verbindungselement besteht insbesondere zumindest teilweise, vorzugsweise zumindest zu einem Großteil und besonders bevorzugt vollständig aus Kunststoff. Das Verbindungselement weist insbesondere ein Gewinde auf, mittels dessen es an dem Dämmstoffelement befestigt werden kann. Das Verbindungselement weist insbesondere eine Länge von höchstens 200 mm, vorzugsweise von höchstens 150 mm und besonders bevorzugt von höchstens 100 mm auf. Besonders bevorzugt ist das Verbindungselement zumindest im Wesentlichen 90 mm lang. Das Verbindungselement ist insbesondere zu wenigstens 35 %, vorzugsweise zu wenigstens 50 % und besonders bevorzugt zu wenigstens 60 % seiner Länge in dem Dämmstoffelement angeordnet. Das Verbindungselement ist insbesondere zu höchstens 65 %, vorzugsweise zu höchstens 50 % und besonders bevorzugt zu höchstens 35 % seiner Länge in dem Trägerelement angeordnet. Hierdurch kann eine Verbindung zwischen Trägerelement und Dämmstoffelement weiter verbessert werden, indem zusätzlich eine kraft- und/oder formschlüssige Verbindung erzeugt wird.

Um das Verbindungselement verdeckt anzuordnen, wird vorgeschlagen, dass in einem Montageschritt das Verbindungselement, ausgehend von einer Seite des Dämmstoffelements, an welcher im Verbundschritt das Trägerelement angeordnet wird, an dem Dämmstoffelement angeordnet wird. Das Verbindungselement wird vorzugsweise kraft-und/oder formschlüssig mit dem Dämmstoffelement verbunden. Vorzugsweise wird im Montageschritt das Verbindungselement in das Dämmstoffelement eingeschraubt. Alternativ oder zusätzlich kann das Verbindungselement mit dem Dämmstoffelement stoffschlüssig verbunden werden, beispielsweise durch Kleben.

In einem weiteren Aspekt der Erfindung wird eine Gebäudedeckenvorrichtung gemäß dem Anspruch 8 vorgeschlagen, welche mittels des obigen Verfahrens hergestellt sein kann.

Hierdurch kann vorteilhaft eine Effizienz, insbesondere eine Kosteneffizienz, verbessert werden. Insbesondere kann in einem einzigen Schritt das Trägerelement ausgebildet und mit dem Dämmstoffelement verbunden werden. Besonders vorteilhaft kann eine nachträgliche Montage, insbesondere eine nachträgliche Über-Kopf-Montage, des Dämmstoffelements vermieden werden. Insbesondere können Deformationen und/oder Beschädigungen des Dämmstoffelements vermieden werden.

Gemäß der Erfindung wird vorgeschlagen, dass das Dämmstoffelement zumindest teilweise aus einem Kunststoffhartschaum besteht. Hierdurch kann vorteilhaft eine Stabilität des Dämmstoffelements verbessert werden.

Es wird ferner vorgeschlagen, dass das Dämmstoffelement wenigstens eine Deckschicht aufweist, welche den Kunststoffhartschaum zumindest teilweise, insbesondere zumindest zu einem Großteil und besonders bevorzugt vollständig und insbesondere mittels einer weiteren Deckschicht beidseitig, bedeckt. Hierdurch kann vorteilhaft eine stoffschlüssige Verbindung zwischen Dämmstoffelement und Trägerelement verbessert werden.

Des Weiteren wird vorgeschlagen, dass die Deckschicht zumindest teilweise aus einem Mineralvlies besteht. Unter einem "Mineralvlies" soll insbesondere ein Verbundwerkstoff verstanden werden, welcher zumindest teilweise aus einem Faservlies, insbesondere einem Glasfaservlies, und zumindest einem Mineralbaustoff, wie vorzugsweise Kalziumkarbonat, besteht. Insbesondere kann eine Stabilität des Dämmstoffelements verbessert werden.

Um eine Brandschutzwirkung zu verbessern, wird ferner vorgeschlagen, dass die Deckschicht, insbesondere die weitere Deckschicht, und zwar vorzugsweise die raumseitige Deckschicht, zumindest teilweise aus einem Brandschutzstoff besteht, welcher dazu vorgesehen ist, in wenigstens einem Betriebszustand eine Intumeszenzschicht auszubilden. Unter einer "Intumeszenzschicht" soll insbesondere eine Schicht verstanden werden, welche dazu vorgesehen ist, sich in einem Brandfall, beispielsweise durch Hitzeeinwirkung zu aktivieren und sich insbesondere durch Anschwellung oder Aufschäumung des Brandschutzstoffes auszubilden. Vorzugsweise kann die Deckschicht mit dem Brandschutzstoff durch Imprägnierung versehen werden. Vorzugsweise wird das Mineralvlies in zumindest einem Herstellungsschritt mit einer mit dem Brandschutzstoff versehenen Flüssigkeit getränkt. Insbesondere kann der Brandschutzstoff zumindest teilweise Graphit umfassen und besonders bevorzugt als Blähgraphit ausgebildet sein.

### Zeichnungen

Weitere Vorteile ergeben sich aus der folgenden Zeichnungsbeschreibung. In den Zeichnungen sind drei Ausführungsbeispiele dargestellt. Die Zeichnungen, die Beschreibung und die Ansprüche enthalten zahlreiche Merkmale in Kombination.

Es zeigen:
- Fig. 1: ein Gebäude mit einer Gebäudevorrichtung in einer schematischen Darstellung,
- Fig. 2: einen Teil der Gebäudevorrichtung mit einer Decke in einer Schnittansicht,
- Fig. 3: eine beispielhafte Anordnung von Dämmstoffelementen der Gebäudevorrichtung,
- Fig. 4: einen schematischen Ablaufplan eines Verfahrens zur Herstellung der Gebäudevorrichtung,
- Fig. 5: einen Teil einer alternativen Gebäudevorrichtung mit einer Decke in einer Schnittansicht und
- Fig. 6: einen Teil einer weiteren alternativen Gebäudevorrichtung mit einer Decke in einer Schnittansicht.

### Beschreibung der Ausführungsbeispiele

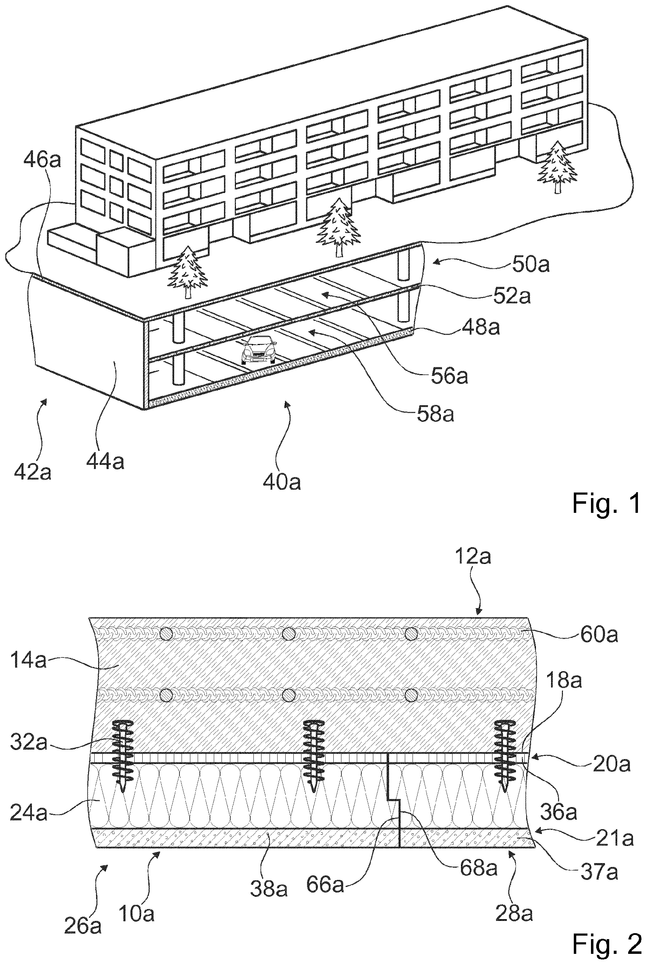

Fig. 1 zeigt ein Gebäude 40a mit einer Gebäudevorrichtung. Das Gebäude 40a ist im vorliegenden Fall als eine Tiefgarage ausgebildet. Alternativ kann das Gebäude 40a auch als ein Parkhaus, ein Industriegebäude, ein Bürogebäude und/oder ein Wohngebäude ausgebildet sein. Die Gebäudevorrichtung weist eine Grundkonstruktion 42a auf. Die Grundkonstruktion 42a umfasst Seitenwände 44a, ein Dach 46a und eine Gründung 48a. Die Grundkonstruktion 42a begrenzt einen Gebäudeinnenraum 50a. Ferner umfasst die Gebäudevorrichtung zumindest eine Decke 52a. Die Decke 52a bildet eine Geschossdecke aus. Die Decke 52a unterteilt den Gebäudeinnenraum 50a in zumindest zwei Geschossinnenräume 56a, 58a.

In Fig. 2 ist ein Teil der Gebäudevorrichtung mit der Decke 52a in einem Querschnitt dargestellt. Die Gebäudevorrichtung weist zumindest ein Trägerelement 12a auf. Das Trägerelement 12a ist zumindest teilweise aus einem frei ausgeformten und ausgehärteten Baustoff 14a hergestellt. Im vorliegenden Fall ist der Baustoff 14a Beton und/oder Zement. Alternativ oder zusätzlich könnte ein anderer, einem Fachmann bekannter, insbesondere abbindender Baustoff 14a verwendet werden. Das Trägerelement 12a umfasst zumindest eine Bewehrung 60a. Das Trägerelement 12a weist eine Dicke von zumindest 30 mm auf. Zumindest im Wesentlichen senkrecht zu einer Haupterstreckungsrichtung des Trägerelements 12a weist diese eine Dicke von zumindest 30 mm auf. Das Trägerelement 12a begrenzt von einer Seite den Geschossinnenraum 56a.

Die Gebäudevorrichtung weist eine verlorene Schalung 26a auf. Die verlorene Schalung 26a ist an einer Seite des Trägerelements 12a angeordnet, welche der Seite, welche den Geschossinnenraum 56a begrenzt, abgewandt ist. Das Trägerelement 12a ist mit der verlorenen Schalung 26a verbunden. Das Trägerelement 12a ist stoffschlüssig mit der verlorenen Schalung 26a verbunden. Zusätzlich ist das Trägerelement 12a kraft- und/oder formschlüssig mit der verlorenen Schalung 26a verbunden. Das Trägerelement 12a trägt die verlorene Schalung 26a vollständig. Das Trägerelement 12a nimmt eine Gewichtskraft der verlorenen Schalung 26a vollständig auf.

Die Gebäudevorrichtung weist zumindest ein Dämmstoffelement 10a auf. Das Dämmstoffelement 10a bildet zumindest teilweise die verlorene Schalung 26a aus. Das Dämmstoffelement 10a weist ein Fügeelement 66a auf. Das Fügeelement 66a ist als ein Stufenfalz ausgebildet. Das Fügeelement 66a umläuft zumindest teilweise einen Grundkörper des Dämmstoffelements 10a. Das Fügeelement 66a ist dazu vorgesehen, das Dämmstoffelement 10a mit zumindest einem weiteren Dämmstoffelement 28a zu verbinden. Die Gebäudevorrichtung weist das weitere Dämmstoffelement 28a auf. Das weitere Dämmstoffelement 28a ist zumindest im Wesentlichen äquivalent zu dem Dämmstoffelement 10a ausgebildet. Das weitere Dämmstoffelement 28a bildet zumindest teilweise die verlorene Schalung 26a aus. Das weitere Dämmstoffelement 28a weist ein weiteres Fügeelement 68a auf. Das weitere Fügeelement 68a ist korrespondierend zu dem Fügeelement 66a ausgebildet. Die Fügeelemente 66a, 68a bilden eine Nut-Feder-Verbindung aus. Das Dämmstoffelement 10a und das weitere Dämmstoffelement 28a sind kraft- und/oder formschlüssig miteinander verbunden. Alternativ oder zusätzlich können das Dämmstoffelement 10a und das weitere Dämmstoffelement 28a stoffschlüssig miteinander verbunden sein, insbesondere durch Verkleben der Fügeelemente 66a, 68a miteinander. Das Dämmstoffelement 10a und das weitere Dämmstoffelement 28a bilden gemeinsam zumindest teilweise die verlorene Schalung 26a aus.

Ferner weist die Gebäudevorrichtung zusätzliche Dämmstoffelemente auf. Die weiteren Dämmstoffelemente sind zumindest im Wesentlichen äquivalent zu dem Dämmstoffelement 10a und/oder dem Dämmstoffelement 28a ausgebildet. Die zusätzlichen Dämmstoffelemente bilden zusammen mit dem Dämmstoffelement 10a und dem weiteren Dämmstoffelement 28a die verlorene Schalung 26a vollständig aus. Der Übersichtlichkeit halber sind nur das Dämmstoffelement 10a und das weitere Dämmstoffelement 28a mit einem Bezugszeichen versehen. Die Eigenschaften und Beschreibungen, welche sich auf das Dämmstoffelement 10a und/oder das weitere Dämmstoffelement 28a beziehen, sind demnach unmittelbar auf die zusätzlichen Dämmstoffelemente übertragbar.

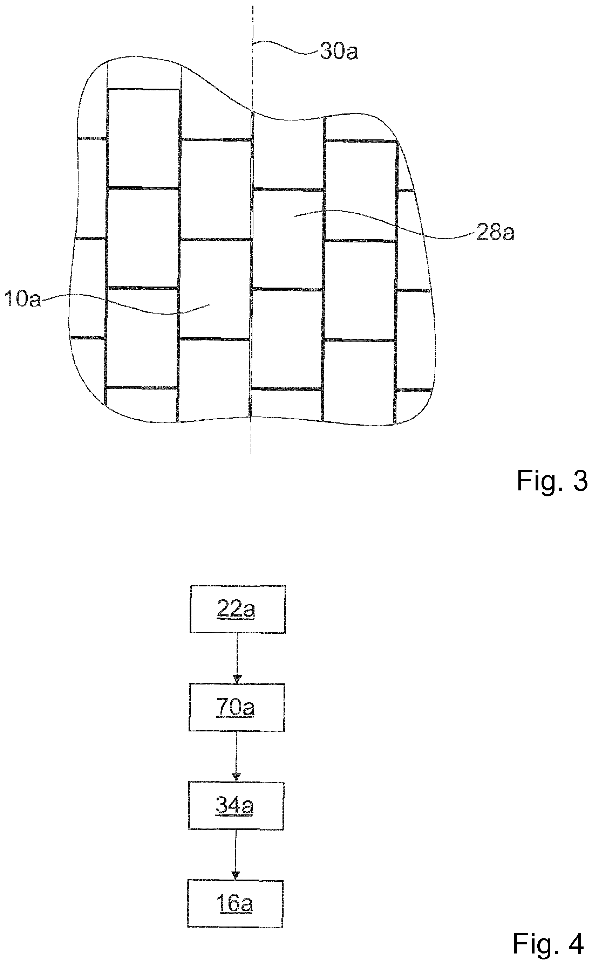

In Fig. 3 ist schematisch eine beispielhafte Anordnung von Dämmstoffelementen 10a, 28a zur Ausbildung der verlorenen Schalung 26a dargestellt. Das weitere Dämmstoffelement 28a ist entlang einer Linie 30a mit dem Dämmstoffelement 10a zusammengefügt. Entlang der Linie 30a sind das Dämmstoffelement 10a und das weitere Dämmstoffelement 28a zumindest teilweise zueinander versetzt angeordnet. Die Linie 30a ist eine Gerade. Die Linie 30a verläuft vorzugsweise zumindest im Wesentlichen parallel zu einer Haupterstreckungsebene des Dämmstoffelements 10a und/oder des weiteren Dämmstoffelements 28a.

Im Folgenden ist das Dämmstoffelement 10a und insbesondere das Zusammenwirken des Dämmstoffelements 10a mit weiteren Bauteilen der Gebäudevorrichtung beschrieben. Die Eigenschaften und Beschreibungen, welche sich auf das Dämmstoffelement 10a beziehen, sind unmittelbar auf das weitere Dämmstoffelement 28a und insbesondere die zusätzlichen Dämmstoffelemente übertragbar. Es ist jedoch auch denkbar, dass das Dämmstoffelement 10a und das weitere Dämmstoffelement 28a und/oder insbesondere die zusätzlichen Dämmstoffelemente voneinander verschieden ausgebildet sind.

Das Dämmstoffelement 10a weist eine Dicke von höchstens 120 mm auf. Das Dämmstoffelement 10a ist ein Hochleistungsdämmstoffelement. Zumindest im Wesentlichen senkrecht zu einer Haupterstreckungsrichtung des Dämmstoffelements 10a weist dieses die Dicke von höchstens 120 mm auf. Ferner weist das Dämmstoffelement 10a eine Wärmeleitfähigkeit von weniger als 0,028 W/mK auf. Das Dämmstoffelement 10a ist schwerentflammbar, insbesondere gemäß Klasse B und/oder Klasse C der Norm EN 13501-1. Ferner ist das Dämmstoffelement 10a zumindest im Wesentlichen druckfest. Das Dämmstoffelement 10a ist dazu ausgelegt, insbesondere gemäß der Norm EN 826, einem Druck von mehr als 120 kPa zu widerstehen.

Das Dämmstoffelement 10a kann als ein Dämmstoffschichtelement ausgebildet sein. Das Dämmstoffelement 10a ist frei von einem thermoplastischen Material, wie beispielsweise Polystyrol. Das Dämmstoffelement 10a besteht zumindest teilweise aus einem Kunststoffhartschaum 24a. Der Kunststoffhartschaum 24a besteht zumindest teilweise aus einem duroplastischen Material. Das duroplastische Material ist Polyurethan und/oder Polyisocyanurat (trimerisierter Polyurethan). Alternativ oder zusätzlich kann ein anderes, von einem Fachmann als vorteilhaft angesehenes duroplastisches Material Verwendung finden.

Das Dämmstoffelement 10a weist eine offenporige Oberfläche 18a auf. Die offenporige Oberfläche 18a ist zur Verbindung des Baustoffs 14a mit dem Dämmstoffelement 10a vorgesehen. Die offenporige Oberfläche 18a ist von zumindest teilweise geöffneten Poren und/oder Kapillaren, insbesondere des duroplastischen Materials, gebildet. Der Baustoff 14a füllt zumindest teilweise die geöffneten Poren und/oder Kapillaren aus.

Das Dämmstoffelement 10a weist eine Deckschicht 20a auf. Die Deckschicht 20a bildet zumindest teilweise die offenporige Oberfläche 18a aus. Die Deckschicht 20a ist auf den Kunststoffhartschaum 24a aufgebracht, insbesondere durch Laminieren. Die Deckschicht 20a ist mit dem Kunststoffhartschaum 24a verbunden, insbesondere stoffschlüssig verbunden. Die Deckschicht 20a ist auf einer Seite des Kunststoffhartschaums 24a aufgebracht, welcher dem Trägerelement 12a zugewandt ist. Die Deckschicht 20a ist dem Trägerelement 12a zugewandt. Die Deckschicht 20a schließt mit dem Trägerelement 12a ab. Die Deckschicht 20a besteht zumindest teilweise aus einem Mineralvlies 36a. Das Mineralvlies 36a besteht zumindest teilweise aus einem Faservlies. Ferner besteht das Mineralvlies 36a zumindest teilweise aus einem Mineralbaustoff. Der Mineralbaustoff ist Kalziumkarbonat. Ferner kann das Mineralvlies 36a einen Kleber umfassen. Es ist denkbar, dass auf eine Deckschicht 20a verzichtet werden kann. Alternativ oder zusätzlich kann die offenporige Oberfläche 18a von dem Kunststoffhartschaum 24a selbst gebildet sein, insbesondere wenn auf die Deckschicht 20a verzichtet wird.

Das Dämmstoffelement 10a umfasst eine weitere Deckschicht 21a. Die Deckschicht 21a ist auf den Kunststoffhartschaum 24a aufgebracht, insbesondere durch Laminieren. Die weitere Deckschicht 21a ist mit dem Kunststoffhartschaum 24a verbunden, insbesondere stoffschlüssig verbunden. Die weitere Deckschicht 21a ist auf einer Seite des Kunststoffhartschaums 24a aufgebracht, welche dem Trägerelement 12a abgewandt ist. Die weitere Deckschicht 21a ist dem Trägerelement 12a abgewandt. Die weitere Deckschicht 21a begrenzt den Geschossinnenraum 58a. Die weitere Deckschicht 21a besteht zumindest teilweise aus einem Brandschutzstoff 38a. Die weitere Deckschicht 21a weist ein weiteres Mineralvlies 37a auf. Das weitere Mineralvlies 37a ist mit dem Brandschutzstoff 38a imprägniert. Der Brandschutzstoff 38a ist dazu vorgesehen, bei einer Hitzeentwicklung eine Intumeszenzschicht auszubilden. Der Brandschutzstoff 38a ist dazu vorgesehen, anzuschwellen und/oder aufzuschäumen, um die Intumeszenzschicht auszubilden.

Ferner ist denkbar, dass die weitere Deckschicht 21a zumindest eine antimikrobielle Beschichtung aufweist, wie beispielsweise eine Metalldeckschicht, welche zumindest Aluminium umfasst.

Die Gebäudevorrichtung weist zumindest ein Verbindungselement 32a auf. Im vorliegenden Fall weist die Gebäudevorrichtung mehrere Verbindungselemente 32a auf. Der Übersichtlichkeit halber ist nur ein Verbindungselement 32a mit einem Bezugszeichen versehen. Die nachfolgende Beschreibung kann dabei auf die weiteren Verbindungselemente übertragen werden. Das Verbindungselement 32a ist ausgehend von einer Seite des Dämmstoffelements 10a, an welcher das Trägerelement 12a angeordnet ist, an dem Dämmstoffelement 10a angeordnet. Das Verbindungselement 32a ist ein Dübel. Das Verbindungselement 32a besteht zumindest teilweise aus einem Kunststoff. Das Verbindungselement 32a ist in das Dämmstoffelement 10a eingeschraubt. Das Verbindungselement 32a weist insbesondere eine Länge von 90 mm auf. Das Verbindungselement 32a ist zu 66 % seiner Länge in dem Dämmstoffelement 10a angeordnet. Das Verbindungselement 32a ist zu 33 % seiner Länge in dem Trägerelement 12a angeordnet.

Das Dämmstoffelement 10a ist mittels des ausgehärteten Baustoffs 14a mit dem Trägerelement 12a zumindest stoffschlüssig verbunden. Zudem ist das Dämmstoffelement 10a mittels des Verbindungselements 32a mit dem Trägerelement 12a kraft- und/oder formschlüssig verbunden.

In Fig. 4 ist ein schematischer Ablaufplan eines Verfahrens zur Herstellung der Gebäudevorrichtung dargestellt. Das Verfahren umfasst einen Herstellungsschritt 22a. In dem Herstellungsschritt 22a wird das Dämmstoffelement 10a hergestellt. In dem Herstellungsschritt 22a wird das Dämmstoffelement 10a durch Laminieren hergestellt. Der Kunststoffhartschaum 24a wird zumindest mit der Deckschicht 20a laminiert. Ferner wird der Kunststoffhartschaum 24a mit der weiteren Deckschicht 21a laminiert. Insbesondere vor dem Laminieren wird die weitere Deckschicht 21a mit dem Brandschutzstoff 38a imprägniert. Zur Imprägnierung wird das Mineralvlies 37a der weiteren Deckschicht 21a mit einer mit dem Brandschutzstoff 38a versehenen Flüssigkeit getränkt. Im vorliegenden Fall wird der Kunststoffhartschaum 24a beidseitig mit der Deckschicht 20a und der weiteren Deckschicht 21a laminiert. Der Kunststoffhartschaum 24a wird von zumindest einem Teil eines vor dem Herstellungsschritt hergestellten Rohlings gebildet. Dazu wird der vorgefertigte Rohling zerteilt. Durch das Zerteilen werden in dem Rohling eingeschlossene Poren und/oder Kapillaren zumindest teilweise geöffnet. Alternativ oder zusätzlich kann der Kunststoffhartschaum 24a direkt beim Laminieren auf die Deckschichten 20a, 21a und/oder zwischen die Deckschichten 20a, 21a aufgeschäumt werden. Ferner ist es denkbar, dass bei dem Verfahren zur Herstellung der Gebäudevorrichtung ein vorgefertigtes Dämmstoffelement Verwendung findet, sodass auf den Herstellungsschritt 22a verzichtet werden kann.

Das Verfahren weist einen Vormontageschritt 70a auf. In dem Vormontageschritt 70a wird zumindest teilweise aus den Dämmstoffelementen 10a, 28a eine Form, insbesondere eine Gussform, hergestellt. Um die Form herzustellen, werden die Dämmstoffelemente 10a, 28a zusammengefügt. Das weitere Dämmstoffelement 28a wird entlang der Linie 30a mit dem Dämmstoffelement 10a zusammengefügt. Entlang der Linie 30a werden das Dämmstoffelement 10a und das weitere Dämmstoffelement 28a zumindest teilweise zueinander versetzt angeordnet. Die Dämmstoffelemente 10a, 28a werden mittels der Fügeelemente 66a, 68a miteinander verbunden. Die Fügeelemente 66a, 68a verbinden die Dämmstoffelemente 10a, 28a kraft- und/oder formschlüssig miteinander. Die Fügeelemente 66a, 68a bilden eine Nut-Feder-Verbindung aus. Alternativ oder zusätzlich ist es denkbar, dass das Dämmstoffelement 10a und das weitere Dämmstoffelement 28a miteinander stoffschlüssig verbunden werden können, wie beispielsweise durch Verkleben, insbesondere durch Verkleben der Fügeelemente 66a, 68a.

Das Verfahren umfasst einen Montageschritt 34a. In dem Montageschritt 34a wird zumindest das Verbindungselement 32a mit dem Dämmstoffelement 10a verbunden. Das Verbindungselement 32a wird ausgehend von der Seite des Dämmstoffelements 10a, an welcher im Verbundschritt 16a das Trägerelement 12a angeordnet wird, an dem Dämmstoffelement 10a angeordnet. Das Verbindungselement 32a wird in das Dämmstoffelement 10a eingeschraubt. Alternativ oder zusätzlich kann das Verbindungselement 32a mit dem Dämmstoffelement 10a stoffschlüssig verbunden werden, beispielsweise durch Kleben.

Das Verfahren weist einen Verbundschritt 16a auf. In dem Verbundschritt 16a wird der frei formbare und aushärtbare Baustoff 14a in die Form, welche von zumindest den Dämmstoffelementen 10a, 28a ausgebildet wird, eingebracht. Der Baustoff 14a fließt auf die offenporige Oberfläche 18a. Der Baustoff 14a füllt die zumindest teilweise geöffneten Poren und/oder Kapillaren der offenporigen Oberfläche 18a aus. Der Baustoff 14a durchdringt zumindest teilweise die Deckschicht 20a an. Der Baustoff 14a wird ausgehärtet. Der Baustoff 14a wird abgebunden. Der ausgehärtete Baustoff 14a bildet das Trägerelement 12a für das Dämmstoffelement 10a aus. Die durchdrungene Deckschicht 20a härtet gemeinsam mit dem Baustoff 14a aus. Die Deckschicht 20a wird mit dem Baustoff 14a stoffschlüssig verbunden. Durch das Aushärten werden die Dämmstoffelemente 10a, 28a zumindest stoffschlüssig mit dem Trägerelement 12a verbunden. Die aus zumindest den Dämmstoffelementen 10a, 28a gebildeten Form wird mit dem Trägerelement 12a verbunden und bildet die verlorene Schalung 26a aus. Ferner wird das Verbindungselement 32a von dem Baustoff 14a umschlossen und verbindet zusätzlich kraft- und/oder formschlüssig die Dämmstoffelemente 10a, 28a mit dem Trägerelement 12a.

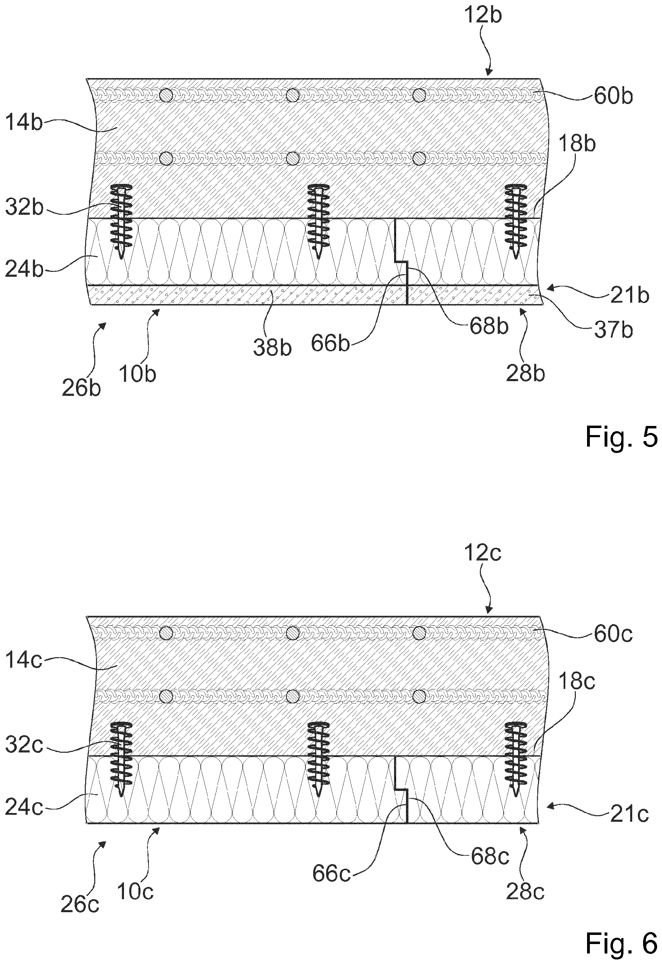

In den Fig. 5 und 6 sind zwei weitere Ausführungsbeispiele gezeigt. Die nachfolgende Beschreibung und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Fig. 5 und 6 ist der Buchstabe a durch die Buchstaben b und c ersetzt.

Fig. 5 zeigt ein alternatives Ausführungsbeispiel. Das alternative Ausführungsbeispiel unterscheidet sich von dem vorherigen Ausführungsbeispiel der Fig. 2 zumindest im Wesentlichen hinsichtlich einer Ausgestaltung eines Dämmstoffelements 10b der Gebäudevorrichtung. Im vorliegenden Fall ist das Dämmstoffelement 10b frei von einer Deckschicht 20a, welche insbesondere im vorangegangenen Ausführungsbeispiel in Fig. 2 zwischen dem Kunststoffhartschaum 24a und dem Trägerelement 12a angeordnet ist. Ein Kunststoffhartschaum 24b bildet eine offenporige Oberfläche 18b aus. Der Kunststoffhartschaum 24b ist unmittelbar mit dem Trägerelement 12b verbunden. Ferner umfasst das Dämmstoffelement 10b zumindest eine Deckschicht 21b, welche auf einer Seite des Dämmstoffelements 10b angeordnet ist, welche dem Trägerelement 12b abgewandt ist. Die weitere Deckschicht 21b umfasst einen Brandschutzstoff 38b. Denkbar ist, dass der Kunststoffhartschaum 24b mit der weiteren Deckschicht 21b verputzt sein kann.

Fig. 6 zeigt ein weiteres alternatives Ausführungsbeispiel. Das alternative Ausführungsbeispiel unterscheidet sich von dem vorherigen Ausführungsbeispiel in Fig. 2 zumindest im Wesentlichen hinsichtlich einer Ausgestaltung eines Dämmstoffelements 10c der Gebäudevorrichtung. Im vorliegenden Fall ist das Dämmstoffelement 10c frei von einer Deckschicht 20a, welche insbesondere im vorangegangenen Ausführungsbeispiel in Fig. 2 zwischen dem Kunststoffhartschaum 24a und dem Trägerelement 12a angeordnet ist. Ferner ist das Dämmstoffelement 10c frei von einer weiteren Deckschicht 21a, welche insbesondere im vorhergehenden Ausführungsbeispiel der Fig. 2 auf einer Seite des Dämmstoffelements 10a angeordnet ist, welche dem Trägerelement 12a abgewandt ist. Im vorliegenden Fall ist das Dämmstoffelement 10c vollständig von einem Kunststoffhartschaum 24c gebildet.

## Patentansprüche

1. Verfahren zur Herstellung einer Gebäudedeckenvorrichtung, welche eine Decke eines Gebäudes zumindest zu einem Großteil, besonders bevorzugt vollständig, ausbildet, welche wenigstens ein Dämmstoffelement (10a, 28a) aufweist, welches zumindest teilweise aus einem Kunststoffhartschaum (24a) besteht, wobei das Dämmstoffelement (10a, 28a) zumindest zu einem Großteil aus einem duroplastischen Material besteht und frei von einem thermoplastischen Material, wie beispielsweise Polystrol, ist, schwerentflammbar gemäß Klasse B und/oder Klasse C der Norm EN 13501-1 ist und eine Wärmeleitfähigkeit von weniger als 0,030 W/mK aufweist, und welche wenigstens ein Trägerelement (12a) aufweist, das zumindest teilweise aus einem frei formbaren und aushärtbaren Baustoff (14a) hergestellt wird und das eine Gewichtskraft des Dämmstoffelements (10a, 28a) zumindest zum Großteil aufnimmt, wobei in zumindest einem Vormontageschritt (70a) zumindest teilweise aus dem Dämmstoffelement (10a) und zumindest einem weiteren Dämmstoffelement (28a) der Gebäudedeckenvorrichtung eine Form, insbesondere eine Gussform, hergestellt wird und wobei in zumindest einem Verbundschritt (16a) der frei formbare und aushärtbare Baustoff in die Form, welche von zumindest den Dämmstoffelementen (10a, 28a) ausgebildet wird, eingebracht wird und durch Aushärten des Baustoffs (14a) das Dämmstoffelement (10a) zumindest stoffschlüssig mit dem Trägerelement (12a) verbunden wird, wobei das Dämmstoffelement (10a) zumindest eine Deckschicht (20a) aufweist, welche in dem Verbundschritt (16a) zumindest stoffschlüssig mit dem Baustoff (14a) verbunden wird, **dadurch gekennzeichnet, dass** die Deckschicht (20a) auf einer Seite des Kunststoffhartschaums (24a) aufgebracht wird, welcher dem Trägerelement (12a) zugewandt wird.

2. Verfahren nach Anspruch 1, **dadurch gekennzeichnet, dass** das Dämmstoffelement (10a, 28a) eine offenporige Oberfläche (18a) aufweist, welche in dem Verbundschritt (16a) zumindest stoffschlüssig mit dem Baustoff (14a) verbunden wird.

3. Verfahren nach einem der vorhergehenden Ansprüche, **dadurch gekennzeichnet, dass** in zumindest einem Herstellungsschritt (22a) das Dämmstoffelement (10a, 28a) durch Laminieren des Kunststoffhartschaums (24a) mit zumindest der Deckschicht (20a, 21a) hergestellt wird.

4. Verfahren nach einem der vorhergehenden Ansprüche, **dadurch gekennzeichnet, dass** das Dämmstoffelement (10a, 28a) in dem Verbundschritt (16a) zumindest teilweise eine verlorene Schalung (26a) ausbildet.

5. Verfahren nach einem der vorhergehenden Ansprüche, **dadurch gekennzeichnet, dass** die Gebäudedeckenvorrichtung zumindest das weitere Dämmstoffelement (, 28a) aufweist, welches in zumindest dem Vormontageschritt (70a) entlang einer Linie (30a) mit dem Dämmstoffelement (10a) zusammengefügt wird, sodass das Dämmstoffelement (10a) und das weitere Dämmstoffelement (28a) entlang der Linie (30a) zumindest teilweise zueinander versetzt angeordnet sind.

6. Verfahren nach einem der vorhergehenden Ansprüche, **dadurch gekennzeichnet, dass** die Gebäudedeckenvorrichtung zumindest ein Verbindungselement (32a) aufweist, wobei das Dämmstoffelement (10a, 28a) und das Trägerelement (12a) in dem Verbundschritt (16a) mittels des Verbindungselements (32a) zusätzlich zumindest teilweise kraft- und/oder formschlüssig miteinander verbunden werden.

7. Verfahren nach Anspruch 6, **dadurch gekennzeichnet, dass** in einem Montageschritt (34a) das Verbindungselement (32a) ausgehend von einer Seite des Dämmstoffelements (10a, 28a), an welcher im Verbundschritt (16a) das Trägerelement (12a) angeordnet wird, an dem Dämmstoffelement (10a, 28a) angeordnet wird.

8. Gebäudedeckenvorrichtung hergestellt mittels eines Verfahrens nach einem der vorhergehenden Ansprüche, welche eine Decke eines Gebäudes zumindest zu einem Großteil, besonders bevorzugt vollständig, ausbildet, mit zumindest einem Trägerelement (12a), welches zumindest teilweise aus einem frei ausgeformten und ausgehärteten Baustoff (14a) hergestellt ist, und mit wenigstens einem Dämmstoffelement (10a 28a), welches zumindest teilweise aus einem Kunststoffhartschaum (24a) besteht, wobei das Dämmstoffelement (10a, 28a) zumindest zu einem Großteil aus einem duroplastischen Material besteht und frei von einem thermoplastischen Material, wie beispielsweise Polystrol, ist, schwerentflammbar gemäß Klasse B und/oder Klasse C der Norm EN 13501-1 ist und eine Wärmeleitfähigkeit von weniger als 0,030 W/mK aufweist, und mit zumindest einem weiteren Dämmstoffelement (28a), wobei das Dämmstoffelement (10a) und das weitere Dämmstoffelement (28a) eine Form, insbesondere eine Gussform, ausbilden, in welche der frei formbare und aushärtbare Baustoff eingebracht ist und wobei das Dämmstoffelement (10a) wenigstens mittels des ausgehärteten Baustoffs (14a) mit dem Trägerelement (12a) zumindest stoffschlüssig verbunden ist und wobei das Trägerelement (12a) eine Gewichtskraft des Dämmstoffelements (10a, 28a) zumindest zum Großteil aufnimmt, wobei das Dämmstoffelement (10a) zumindest eine Deckschicht (20a) aufweist, welche zumindest stoffschlüssig mit dem Baustoff (14a) verbunden ist, **dadurch gekennzeichnet, dass** die Deckschicht (20a) auf einer Seite des Kunststoffhartschaums (24a) aufgebracht ist, welche dem Trägerelement (12a) zugewandt ist.

9. Gebäudedeckenvorrichtung nach Anspruch 8, **dadurch gekennzeichnet, dass** die wenigstens eine Deckschicht (20a, 21a) den Kunststoffhartschaum (24a) zumindest teilweise bedeckt.

10. Gebäudedeckenvorrichtung nach Anspruch 9, **dadurch gekennzeichnet, dass** die Deckschicht (20a) zumindest teilweise aus einem Mineralvlies (36a) besteht.

11. Gebäudedeckenvorrichtung nach Anspruch 9 oder 10, **dadurch gekennzeichnet, dass** die Deckschicht (20a) oder eine weitere Deckschicht (21a) zumindest teilweise aus einem Brandschutzstoff (38a) besteht, welcher dazu vorgesehen ist, in wenigstens einem Betriebszustand eine Intumeszenzschicht auszubilden.

12. Gebäude (40a), insbesondere Tiefgarage, welches zumindest eine Gebäudedeckenvorrichtung nach einem der Ansprüche 8 bis 11 aufweist.

## Claims

1. Method for producing a building ceiling device
which forms a ceiling of a building at least to a large extent, particularly preferably completely,
which comprises at least one insulation material element (10a, 28a) that is made at least partially of a synthetic rigid foam (24a),
the insulation material element (10a, 28a) being made at least to a large extent of a thermoset material and being free from a thermoplastic material like for example polystyrene, being flame-retardant in accordance with class B and/or class C of the standard EN 13501-1 and having a thermal conductivity of less than 0,030 W/mK, the building ceiling device further comprising at least one support element (12a), which is at least partially made of a freely mouldable and curable construction material (14a) and which receives a weight force of the insulation material element (10a, 28a) at least to a large extent,
wherein in at least one pre-assembly step (70a) a mould, in particular a casting mould, is produced at least partially from the insulation material element (10a) and at least one further insulation material element (28a), and
wherein in at least one connecting step (16a) the freely mouldable and curable construction material is introduced into the mould formed at least by the insulation material elements (10, 28a) and is connected to the support element (12a) at least by substance-to-substance bond by a curing of the construction material (14a),
the insulation material element (10a) comprising at least one cover layer (20a), which is in the connecting step (16a) connected to the construction material (14a) at least by substance-to-substande bond,
**characterised in that** the cover layer (20a) is applied on a side of the synthetic rigid foam (24a) that is turned toward the support element (12a).

2. Method according to claim 1,
**characterised in that** the insulation material element has an open-pored surface (18a), which is in the connecting step (16a) connected to the construction material (14a) at least by substance-to-substance bond .

3. Method according to one of the preceding claims,
**characterised in that** in at least one production step (22a) the insulation material element (10a, 28a) is produced by laminating the synthetic rigid foam (24a) at least with the cover layer (20a, 21a).

4. Method according to one of the preceding claims,
**characterised in that** in the connecting step (16a) the insulation material element (10a, 28a) at least partially forms a dead sheathing (26a).

5. Method according to one of the preceding claims,
**characterised in that** the building ceiling device comprises at least the further insulation material element (28a), which is in the at least one pre-assembly step (70a) joined with the insulation material element (10a) along a line (30a) such that the insulation material element (10a) and the further insulation material element (28a) are arranged at least partially offset from each other along the line (30a).

6. Method according to one of the preceding claims,
**characterised in that** the building ceiling device comprises at least one connection element (32a),
wherein in the connecting step (16a) the insulation material element (10a, 28a) and the support element (12a) are additionally connected to each other at least partially in a force-fit and/or form-fit manner by means of the connection element (32a).

7. Method according to claim 6,
**characterised in that** in an assembly step (34a) the connection element (32a) is arranged at the insulation material element (10a, 28a), starting from a side of the insulation material element (10a, 28a) on which the support element (12a) is arranged in the connection step (16a).

8. Building ceiling device, produced by means of a method according to one of the preceding claims,
which forms a ceiling of a building at least to a large extent, particularly preferably completely,
with at least one support element (12a) that is made at least partially of a freely moulded and cured construction material (14a), and
with at least one insulation material element (10a, 28a) that is made at least partially of a synthetic rigid foam (24a),
the insulation material element (10a, 28a) being made at least to a large extent of a thermosetting material and being free from a thermoplastic material like for example polystyrene, being flame-retardant in accordance with class B and/or class C of the standard EN 13501-1 and having a thermal conductivity of less than 0,030 W/mK, the building ceiling device further comprising at least one further insulation material element (28a),
wherein the insulation material element (10a) and the further insulation material element (28a) form a mould, in particular a casting mould, in which the freely mouldable and curable construction material (14a) is introduced and
wherein the insulation material element (10a) is connected to the support element (12a) at least by substance-to-substance bond by means of the cured construction material (14a), and
wherein the support element (12a) a weight force of the insulation material element (10a, 28a) at least to a large extent,
the insulation material element (10a) comprising at least one cover layer (20a), which is connected to the construction material (14a) at least by substance-to-substande bond,
**characterised in that** the cover layer (20a) is applied on a side of the synthetic rigid foam (24a) that faces toward the support element (12a).

9. Building ceiling device according to claim 8,
**characterised in that** the at least one cover layer (20a, 21a) covers the synthetic rigid foam (24a) at least partially.

10. Building ceiling device according to claim 9,
**characterised in that** the cover layer (20a) is made at least partially of a mineral non-woven (36a).

11. Building ceiling device according to claim 9 or 10,
**characterised in that** the cover layer (20a) or a further cover layer (21a) is made at least partially of a flame retardant material (38a) which is configured to form an intumescence layer in at least one operation state.

12. Building (40a), in particular underground garage, comprising at least one building ceiling device according to one of claims 8 to 11.

## Revendications

1. Procédé pour produire un dispositif de plafond-bâtiment
qui forme un plafond d'un bâtiment au moins en grande partie, particulièrement préférablement complètement,
qui comprend au moins un élément d'isolant (10a, 28a) réalisé au moins partiellement d'une mousse rigide synthétique (24a),
l'élément d'isolant (10a, 28a) consistant au moins largement en matériau thermodurcissable et étant libre d'un matériau thermoplastique comme par exemple polystyrène, étant difficilement inflammable selon la classe B et/ou la classe C du standard EN 13501-1 et ayant une conductivité thermique de moins de 0,030 W/mK,
le dispositif de plafond de bâtiment aussi comprenant au moins un élément porteur (12a) fabriqué au moins partiellement d'un matériau de construction (14a) librement modelable et durcissable et qui supporte au moins largement une force de la pesanteur de l'élément d'isolant (10a, 28a),
où dans au moins une étape de pré-assemblage (70a) une moule, en particulier une moule de fonderie, est fabriquée au moins partiellement de l'élément d'isolant (10a) et d'au moins un élément d'isolant de plus (28a) du dispositif de plafond-bâtiment et où dans au moins une étape de liaison (16a) le matériau de construction, qui est librement malléable et durcissable, est introduit dans la moule formée au moins par les éléments d'isolant (10a, 28a), l'élément d'isolant (10a) étant relié à l'élément porteur (12a) au moins par accouplement en matière par le biais d'un durcissement du matériau de construction (14a),
où l'élément d'isolant (10a) comporte au moins une couche supérieure (20a) qui est dans l'étape de liaison (16a) reliée au matériau de construction (14a) au moins par accouplement en matière,
**caractérisé en ce que** la couche supérieure (20a) est appliquée sur un côté de la mousse rigide synthétique (24a) qui est tourné vers l'élément porteur (12a).

2. Procédé selon la revendication 1,
**caractérisé en ce que** l'élément d'isolant (10a, 28a) comporte une surface aux pores ouverts (18a) qui est relièe au matériau de construction (14a) au moins par accouplement en matière dans l'étape de liaison (16a).

3. Procédé selon l'une des revendications précédentes,
**caractérisé en ce que** dans au moins une étape de production (22a) l'élément d'isolant (10a, 28a) est fabriqué en laminant la mousse rigide synthétique (24) avec au moins la couche supérieure (20a, 21a).

4. Procédé selon l'une des revendications précédentes,
**caractérisé en ce que** dans l'étape de liaison (16a) l'élément d'isolant (10a, 28a) forme au moins partiellement un coffrage perdu (26a).

5. Procédé selon l'une des revendications précédentes,
**caractérisé en ce que** le dispositif de plafond-bâtiment comprend au moins l'élément d'isolant de plus (28a), qui est dans l'au moins une étape de pré-assemblage (70a) joint à l'élément d'isolant (10a) le long d'une ligne (30a) en sorte que l'élément d'isolant (10a) et l'élement d'isolant de plus (28a) soient disposés au moins partiellement décalés l'un par rapport à l'autre le long de la ligne (30a).

6. Procédé selon l'une des revendications précédentes,
**caractérisé en ce que** le dispositif de plafond-bâtiment comprend au moins un élément de liaison (32a), où dans l'étape de liaison (16a) l'élément d'isolant (10a, 28a) et l'élément porteur (12a) sont additionnellement reliés l'un à l'autre au moins partiellement solidairement et/ou par liaison en forme.

7. Procédé selon la revendication 6,
**caractérisé en ce que** dans une étape d'assemblage (34a) l'élément de liaison (32a), est disposé sur l'élément d'isolant (10a, 28a) à partir d'un côté de l'élément d'isolant (10a, 28a) sur laquelle l'élément porteur (12a) est disposé dans l'étape de liaison (16a),.

8. Dispositif de plafond-bâtiment produit par un procédé selon l'une des revendications précédentes,
qui forme un plafond d'un bâtiment au moins en grande partie, particulièrement préférablement complètement,
avec au moins un élément porteur (12a) fabriqué au moins partiellement d'un matériau de construction (14a) librement modelé et durci et
avec au moins un élément d'isolant (10a, 28a) réalisé au moins partiellement d'une mousse rigide synthétique (24a),
l'élément d'isolant (10a, 28a) consistant au moins largement en matériau thermodurcissable et étant libre d'un matériau thermoplastique comme par exemple polystyrène, étant difficilement inflammable selon la classe B et/ou la classe C du standard EN 13501-1 et ayant une conductivité thermique de moins de 0,030 W/mK,
et avedc au moins un élément d'isolant de plus (28a),
l'élément d'isolant (10a) et l'élément d'isolant de plus (28a) formant une moule, en particulier une moule de fonderie, dans laquelle est introduit le matériau de construction qui est librement malléable et durcissable et
l'élément d'isolant (10a) étant relié à l'élément porteur (12a) au moins par accouplement en matière au moins par le biais du matériau de construction (14a) durci, et l'élément porteur (12a) supportant au moins largement une force de la pesanteur de l'élément d'isolant (10a, 28a),
où l'élément d'isolant (10a) comporte au moins une couche supérieure (20a) qui est reliée au matériau de construction (14a) au moins par accouplement en matière, **caractérisé en ce que** la couche supérieure (20a) est appliquée sur un côté de la mousse rigide synthétique (24a) qui est tourné vers l'élément porteur (12a).

9. Dispositif de plafond-bâtiment selon la revendication 8,
**caractérisé en ce que** l'au moins une couche supérieure (20a, 21a) couvre la mousse rigide synthétique (24a) au moins partiellement.

10. Dispositif de plafond-bâtiment selon la revendication 9,
**caractérisé en ce que** la couche supérieure (20a) consiste au moins partiellement en non-tissé minéral (36a).

11. Dispositif de plafond-bâtiment selon l'une des revendications 9 ou 10, **caractérisé en ce que** la couche supérieure (20a) ou une couche supérieure de plus (21a) consiste au moins partiellement en matériau ignifuge (38a) qui est prévu, dans au moins un état opératif, pour former une couche d'intumescence.

12. Bâtiment (40a), en particulier garage souterrain, comprenant au moins un dispositif de plafond-bâtiment selon l'une des revendications 8 à 11.
